# EUROPEAN PATENT APPLICATION

(11) **EP 1 843 568 A1**
(43) Date of publication of application: **10.10.2007**
(21) Application number: 07105689.9
(22) Date of filing: 05.04.2007
(51) Int. Cl.: H04N 1/00

(54) **A display screen controlling apparatus, an electronic apparatus, a display screen controlling method, and a screen displaying method**

(30) Priority: 05.04.2006 JP 2006104437
(71) Applicant: Ricoh Company, Ltd., Tokyo 143-8555 (JP)
(72) Inventor: Takeuchi, Sachiko, Tokyo (JP); Yagiura, Yutaka, Kanagawa (JP)
(74) Representative: Schwabe - Sandmair - Marx

(57) **Abstract**

A display screen controlling apparatus, an electronic apparatus, a display screen controlling method, and a screen displaying method, are disclosed.

The display screen controlling apparatus controls display of a screen on a console panel of an electronic apparatus connected through a network, the display screen controlling apparatus including:
a determining unit for determining a screen to be displayed next based on screen transition information wherein transition of screens to be displayed by the console panel is defined according to
a user who is operating the electronic apparatus,
a screen presently displayed by the console panel, and
an identifier of the user;
a screen data generating unit for generating screen data for displaying the screen determined by the determining unit on the electronic apparatus; and
a screen data providing unit for providing the screen data to the electronic apparatus.

## Description

### BACKGROUND OF THE INVENTION

### [Technical field]

### 1. Field of the Invention

The present invention relates to a display screen controlling apparatus, an electronic apparatus, a display screen controlling method, and a screen displaying method; and especially relates to a display screen controlling apparatus, an electronic apparatus, a display screen controlling method, and a screen displaying method for controlling screens displayed by a console panel of an electronic apparatus.

### 2. Description of the Related Art

### [Background technique]

In recent years and continuing, image formation apparatuses, such as a copying machine and a compound machine, are capable of performing multiple functions, such as printing, copying, facsimile processing, and scanning; and various printing results can be output as desired by a user.

As the number of available functions increases, choices that the user has to make increase. Accordingly, contents displayed by the console panel of the image formation apparatus become variable and complicated, which degrades operability of the image formation apparatus.

Then, an attempt is made to provide an interface that is friendly to the user by making the screens displayed by the console panel hierarchical, and making the screens to be displayed in sequence according to hierarchical relationships so that the contents of a screen are simplified.

### [Patent reference 1]

JPA 2002-84383

### [Disclosure of Invention]

However, conventionally, the sequence of displaying the screens is uniform, that is, the hierarchical relationships of the screens displayed are fixed even if the image formation apparatus is used by different users. For this reason, an unnecessary screen may often be displayed for a skilled user, and an unnecessary screen may often be displayed even when predetermined routine conditions are to be applied, degrading the operability. This problem is common to general electronic apparatuses including a console panel, not limited to the image formation apparatus.

### SUMMARY OF THE INVENTION

The present invention provides a display screen controlling apparatus, an electronic apparatus, a display screen controlling method, and a screen displaying method that substantially obviate one or more of the problems caused by the limitations and disadvantages of the related art.

Features of embodiments of the present invention are set forth in the description that follows, and in part will become apparent from the description and the accompanying drawings, or may be learned by practice of the invention according to the teachings provided in the description. Problem solutions provided by an embodiment of the present invention may be realized and attained by a display screen controlling apparatus, an electronic apparatus, a display screen controlling method, and a screen displaying method particularly pointed out in the specification in such full, clear, concise, and exact terms as to enable a person having ordinary skill in the art to practice the invention.

To achieve these solutions and in accordance with an aspect of the invention, as embodied and broadly described herein, an embodiment of the invention provides a display screen controlling apparatus, an electronic apparatus, a display screen controlling method, and a screen displaying method as follows.

### [Means for solving a problem]

A preferred embodiment of the present invention provides a display screen controlling apparatus for controlling a screen to be displayed by a console panel of an electronic apparatus connected through a network. The display screen controlling apparatus includes
a determining unit for determining a screen to be displayed next after a screen presently displayed based on screen transition information wherein transitional sequence of the screens on the console panel is defined for each of individual users, the screen presently displayed by the console panel, an identifier of the user who is operating the electronic apparatus, and the screen transition information,
a screen data generating unit for generating screen data for displaying the screen determined by the determining unit on the electronic apparatus, and
a screen data providing unit for providing the screen data to the electronic apparatus.

With the display screen controlling apparatus described above, screens are displayed by the electronic apparatus in the sequence that is prescribed according to each user.

### [Effectiveness of invention]

According to the present invention, a display screen controlling apparatus, an electronic apparatus, a display screen controlling method, and a screen displaying method are provided so that suitable screens are displayed by the electronic apparatus according to the user.

### BRIEF DESCRIPTION OF THE DRAWINGS

Fig. 1 is a block diagram of an example of an embodiment of the present invention;
Fig. 2 is a block diagram of an image formation apparatus according to the embodiment of the present invention;
Fig. 3 is a block diagram of hardware of the image formation apparatus according to the embodiment of the present invention;
Fig. 4 is a block diagram of an example of a functional configuration of the image formation apparatus and a server apparatus according to the embodiment of the present invention;
Fig. 5 is a sequence diagram of a default copying process;
Fig. 6 is a sequence diagram of the default copying process;
Fig. 7 shows an example of a default screen transition of screens displayed by the console of the image formation apparatus in the case of the default copying process;
Fig. 8 is a sequence diagram of a copying process based on a user screen customizing function;
Fig. 9 is a sequence diagram of the copying process based on the user screen customizing function;
Fig. 10 shows an example of the screen transition based on the user screen customizing function;
Fig. 11 is a table showing an example of a user screen information table that constitutes a user screen information management database; and
Fig. 12 shows an example of a user screen information registration screen.

### DESCRIPTION OF THE PREFERRED EMBODIMENTS

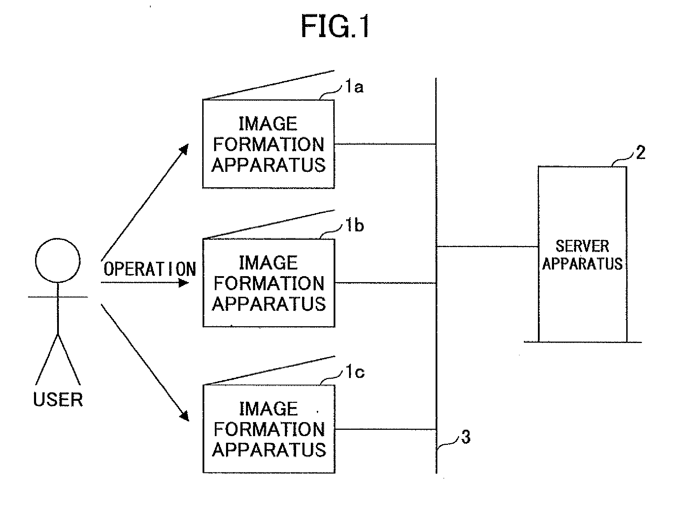

In the following, embodiments of the present invention are described with reference to the accompanying drawings. Fig. 1 is a block diagram of an exemplary embodiment of the present invention.

As shown in Fig. 1, the embodiment includes one or more image formation apparatuses 1a, 1b, 1c, and so on (hereafter, collectively called "the image formation apparatus 1"), and a server apparatus 2 that is connected to the image formation apparatus 1 through a network 3 such as LAN (Local Area Network) that may be one of or a combination of wired and wireless networks.

The image formation apparatus 1 is an electronic apparatus that is generally called a compound machine and is capable of performing two or more of functions such as printing, copying, facsimile, and scanning. The image formation apparatus 1 includes a console panel (operating unit) for receiving an input from and providing information to a user (an operator).

The server apparatus 2 is a computer that includes a program for controlling a screen to be displayed by the console panel of the image formation apparatus 1.

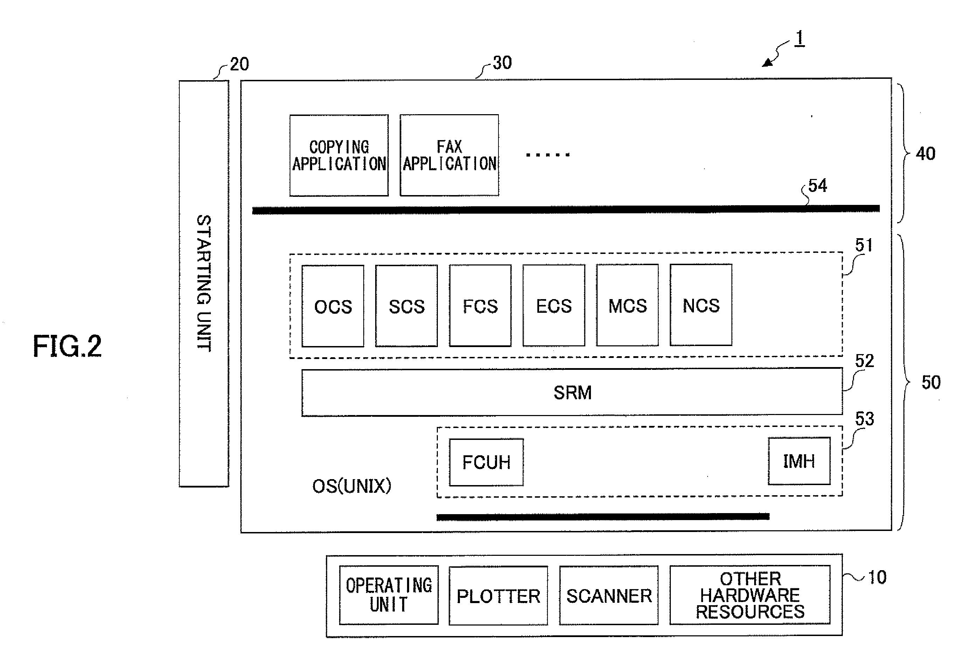

Fig. 2 is a block diagram of the image formation apparatus 1 that includes hardware resources 10, a starting unit 20, and a software group 30.

The hardware resources 10 include devices such as the operating unit (console panel), a plotter, and a scanner. The software group 30 includes a platform 50, and applications 40 carried out on an OS such as UNIX (trademark). When power is turned on for the image formation apparatus 1, the starting unit 20 is first activated, and starts the applications 40 and the platform 50 on the OS.

The applications 40 include a copying application, a facsimile application, and various applications for controlling functions of the image formation apparatus 1. The platform 50 includes control services 51, a SRM (system resource manager) 52, and a handling layer 53. The platform 50 further includes an API (application program interface) 54.

The control services 51 include an OCS (operating unit control service), a SCS (system control service), a FCS (fax control service), an ECS (engine control service), a MCS (memory control service), and a NCS (network control service). The handling layer 53 includes a FCUH (facsimile control unit handler), and an IMH (image memory handler).

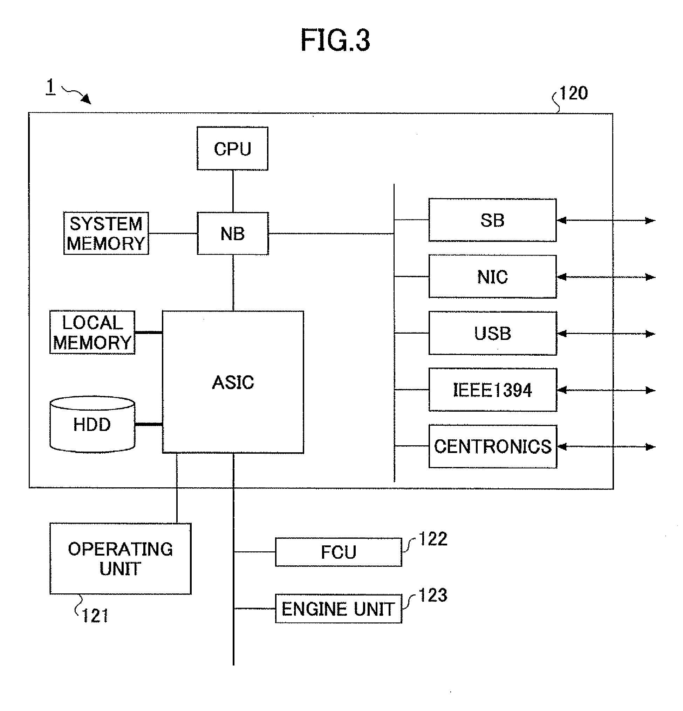

Fig. 3 is a block diagram of hardware of the image formation apparatus 1. The image formation apparatus 1 includes a controller 120, an operating unit 121 (console panel), a FCU 122, and an engine unit 123.

The controller 120 includes a CPU, a system memory, a local memory, a HDD (hard disk drive), a NB (north bridge), an ASIC, a SB (south bridge) a NIC (Network Interface Card), a USB I/F (interface), an IEEE 1394 I/F, and a Centronics I/F. Here, the system memory holds a program described below for realizing functions of the image formation apparatus 1.

Functions and operations of the units of the image formation apparatus 1 of Fig. 2, and functions and operations of the units of the image formation apparatus 1 of Fig. 3 are described in detail by, for example, Patent Reference 1 (JPA 2002-84383); accordingly, they are not repeated here. Hereafter, specific configuration and specific processes according to the present embodiment are described in detail.

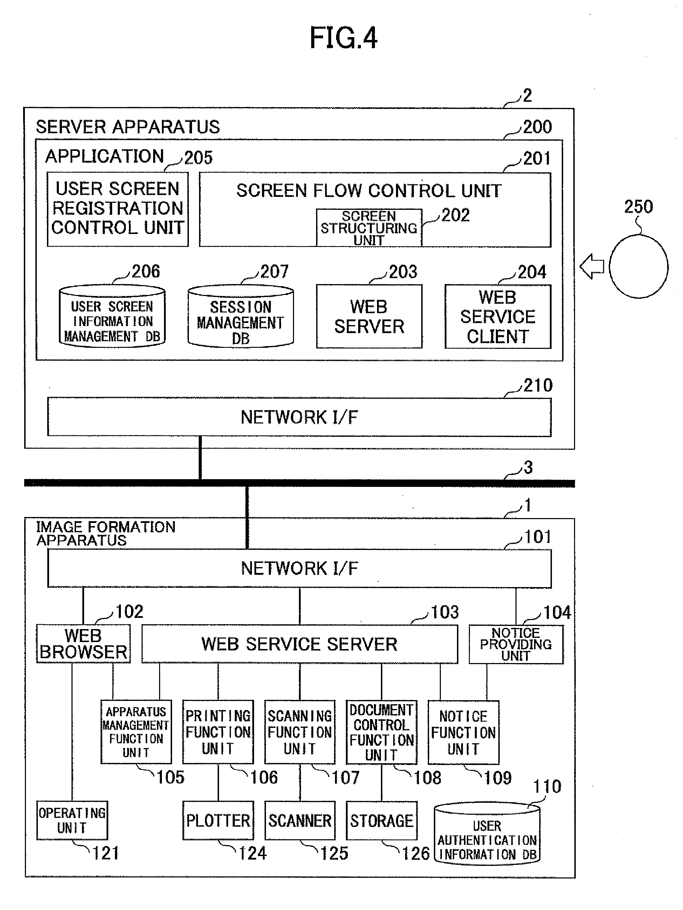

Fig. 4 shows an example of the functional configuration of the image formation apparatus 1 and the server apparatus 2 according to the embodiment of the present invention.

As shown in Fig. 4, functions realized by the image formation apparatus 1 processing a program by the CPU include a network I/F 101, a Web browser 102, a Web service server 103, a notice providing unit 104, an apparatus management function unit 105, a printing function unit 106, a scanning function unit 107, a document control function unit 108, a notice function unit 109, and a user authentication information DB 110. As hardware, the image formation apparatus 1 includes the operating unit (console panel) 121, a plotter 124, a scanner 125, and a storage 126.

The network I/F 101 carries out communication control of, for example, a TCP/IP level with the server apparatus 2. The Web browser 102 displays a Web page in the HTML (HyperText Markup Language) format as a screen displayed by the operating unit 121. The Web page is generated and provided to the image formation apparatus 1 by the server apparatus 2 as described below. The Web browser 102 provides a HTTP request to the server apparatus 2, which HTTP request is an execution request (acquisition request of a screen to be displayed) according to an input into a Web page displayed by the operating unit 121.

The Web service server 103 offers the software functions of the image formation apparatus 1 (the apparatus management function unit 105, the printing function unit 106, the scanning function unit 107, the document control function unit 108, and the notice function unit 109, etc.) as Web services available to the exterior (the server apparatus 2 in this embodiment) through the network 3. That is, when the Web service server 103 receives a remote call (SOAP request) based on SOAP (Simple Object Access Protocol), a function requested by the SOAP request is carried out by the corresponding functional unit. The Web service server 103 receives an execution result from the corresponding functional unit, and provides the execution result in response to the SOAP request.

The notice providing unit 104 provides various events generated in the image formation apparatus 1 to the server apparatus 2 according to requests from the notice function unit 109.

The apparatus management function unit 105 controls instrument information of the image formation apparatus 1. The instrument information includes fundamental information such as an IP address and a host name, and application information such as functional information corresponding to copying.

The printing function unit 106 controls the plotter 124. The scanning function unit 107 controls the scanner 125. The document control function unit 108 stores and manages an image read by the scanner as a document in the storage 126. Here, the storage 126 includes a HDD (Hard Disk Drive).

The notice function unit 109 causes the notice providing unit 104 and the Web service server 103 to provide various events generated in the image formation apparatus 1.

The user authentication information DB 110 manages user information such as a user ID and a password of a user for which user use of the image formation apparatus 1 is permitted. The user information is used in the case of user authentication.

The server apparatus 2 includes an application 200 and a network I/F 210, which functions are realized by a CPU (not illustrated) of the server apparatus 2 executing a program installed from a recording medium 250 such as a CD-ROM. Here, the program may be downloaded from the network 3.

The network I/F 210 controls communication of, for example, a TCP/IP level with the network I/F 101 of the image formation apparatus 1.

The application 200 includes a screen flow control unit 201, a screen generating unit 202, a Web server 203, a Web service client 204, a user screen registration control unit 205, a user screen information management DB 206, and a session management DB 207.

The screen flow control unit 201 controls transition of screens to be displayed by the operating unit 121 of the image formation apparatus 1. The screen generating unit 202 generates screens to be displayed by the operating unit 121 of the image formation apparatus 1 as one of functions of the screen flow control unit 201. As described above, a Web page is displayed by the operating unit 121 by the Web browser 102. Accordingly, the screen generating unit 202 generates the screen to be displayed in the form of the Web page.

The Web server 203 performs a daemon process that awaits the HTTP request. According to the embodiment, the HTTP request is received from the Web browser 102 of the image formation apparatus 1, a process requested by the HTTP is carried out by the screen flow control unit 201, and the like, as applicable, and, as a processing result, a Web page to be displayed by the operating unit 121 is provided to the Web browser 102 in response to the HTTP request.

The session management DB 207 manages information about a session between the Web browser 102 and the Web server 203.

The Web service client 204 and the Web service server 103 work as a pair, and transparently provide the interface to the screen flow control unit 201 and the Web server 203, which interface is a function available on the network as a Web service of the image formation apparatus 1. That is, the Web service client 204 provides an interface corresponding to the function of the image formation apparatus 1 to the screen flow control unit 201, and the like; and provides a SOAP request according to the interface called for by the screen flow control unit 201, and the like, to the Web service server 103. Further, return information contained in the SOAP response to the SOAP request is provided to the calling agency as a return value of the interface.

According to the embodiment, even if the same function (for example, copying function) is used, the screen to be displayed by the operating unit 121 can be differentiated for every user. The user screen registration control unit 205 and the user screen information management DB 206 are for realizing this function (providing user specific screens).

Specifically, the user screen registration control unit 205 controls a process of generating a screen to be displayed customized for every user. The user screen information management DB 206 manages contents of the screen to be displayed customized by the user screen registration control unit 205. In the following, the function for differentiating/customizing the screen to be displayed for every user is called "user screen customizing function".

Hereafter, processes performed by the image formation apparatus 1 and server apparatus 2 are described. The embodiment is described taking a copy process as an example among various functions that the image formation apparatus 1 performs.

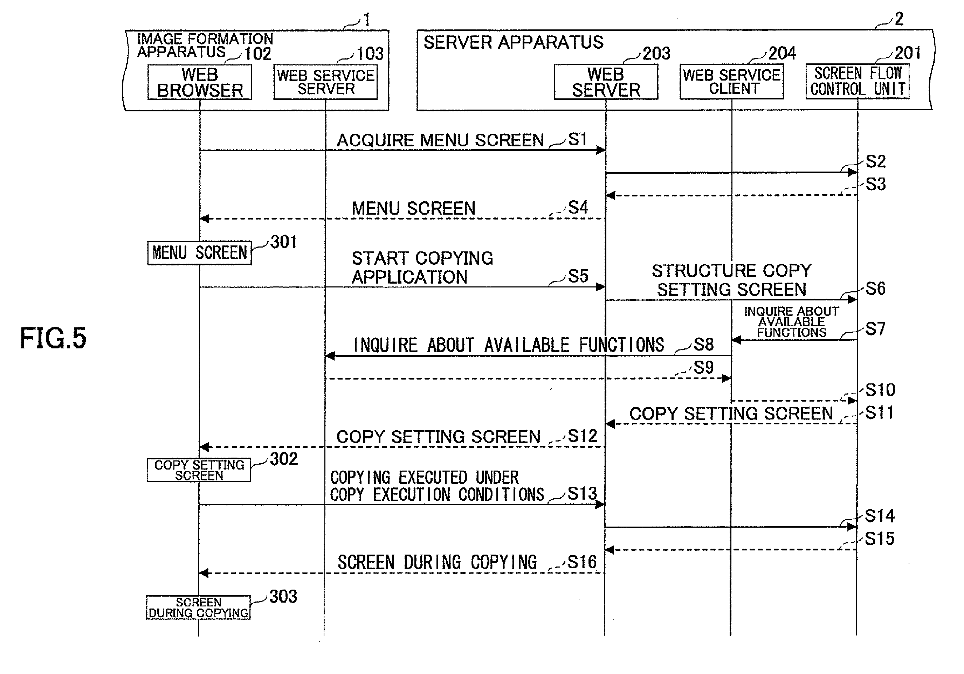

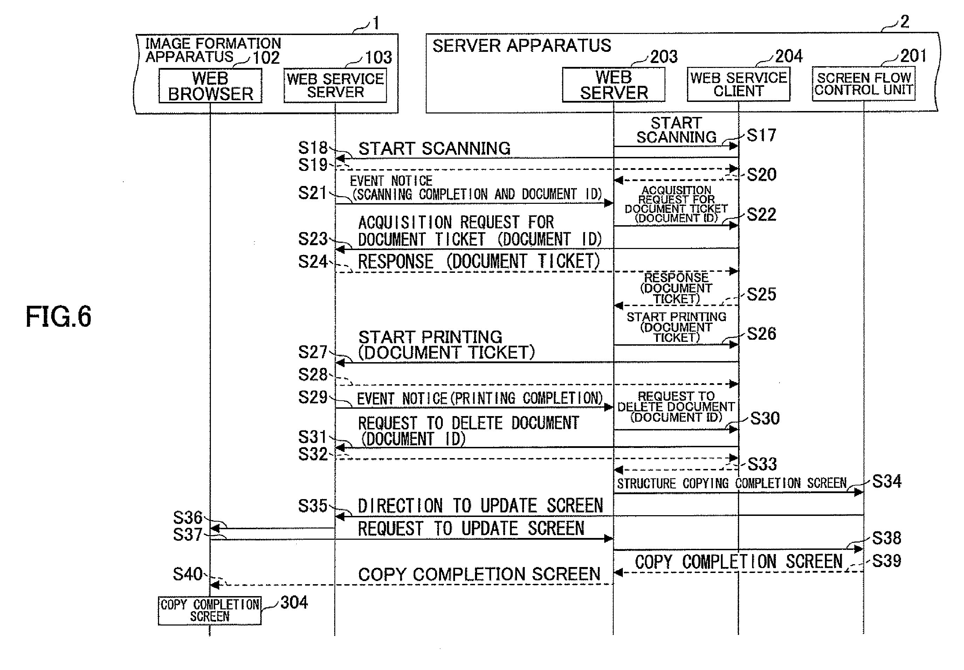

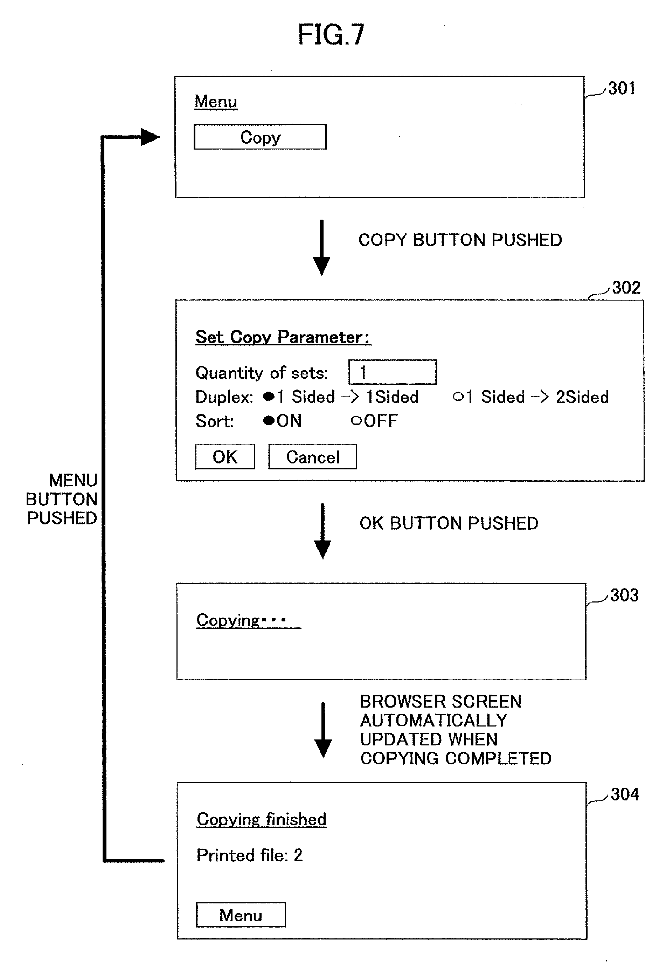

First, a default copying process when the "user screen customizing function" is not used is described. Fig. 5 and 6 are sequence diagrams for describing the default copying process, and Fig. 7 shows an example of default screen transition on the operating unit of the image formation apparatus in the default copying process.

If the power is turned on, the Web browser 102 of the image formation apparatus 1 is started. The Web browser 102 issues an acquisition request for a menu screen to the Web server 203 of the server apparatus 2 (S1). Then, the Web server 203 issues the acquisition request for the menu screen to the screen flow control unit 201 (S2). Then, the screen generating unit 202 of the screen flow control unit 201 generates menu screen data, and outputs the data to the Web server 203 (S3). Then, the Web server 203 provides the menu screen data to the Web browser 102 of the image formation apparatus 1 (S4). Then, the Web browser 102 displays a menu screen 301 (refer to Fig. 7) on the operating unit 121 according to the menu screen data.

Here, if the user activates the copying application from the operating unit 121, the Web browser 102 directs the Web server 203 of the server apparatus 2 to start the copying application (S5). Then, the Web server 203 issues a structuring request for a copy setting screen to the screen flow control unit 201 (S6).

Then, the screen flow control unit 201 queries the Web service client 204 about functions available in the copying application of the image formation apparatus 1 (S7). The Web service client 204 queries the Web service server 103 of the image formation apparatus 1 about the available functions (S8). The Web service server 103 determines the available functions with the apparatus management function unit 105, and the like, and reports the available functions to the Web service client 204 of the server apparatus 2 (S9). The Web service client 204 reports the available functions to the screen flow control unit 201 (S10).

The screen generating unit 202 of the screen flow control unit 201 generates copy setting screen data wherein items corresponding to the available functions are included, and provides the data to the Web server 203 (S11). Then, the Web server 203 provides the copy setting screen data to the Web browser 102 of the image formation apparatus 1 (S12). Then, the Web browser 102 displays a copy setting screen 302 (refer to Fig. 7) on the operating unit 121 according to the copy setting screen data.

Then, if the user directs execution of the copying process from the operating unit 121, for example, by pushing an "OK" button in the copy setting screen 302, the Web browser 102 issues the execution direction for copying with contents (copy execution conditions) specified in the copy setting screen 302 to the Web server 203 of the server apparatus 2 (S13). Then, the Web server 203 reports the execution direction for copying to the screen flow control unit 201 (S14). The screen generating unit 202 of the screen flow control unit 201 generates screen data (data of the screen that is being copied) of the screen (the screen that is being copied) for notifying the user that copying is being performed, and outputs the data to the Web server 203 (S15). Then, the Web server 203 provides the screen data being copied to the Web browser 102 of the image formation apparatus 1 (S16). Then, the Web browser 102 displays a screen during copying 303 (refer to Fig. 7) on the operating unit 121 according to the screen data being copied.

Then, the Web server 203 directs the Web service client 204 to start scanning a manuscript (S17). Then, the Web service client 204 provides the scanning start direction to the Web service server 103 of the image formation apparatus 1 (S18).

Then, the Web service server 103 acknowledges receipt of the scanning start direction to the Web service client 204 (S19). The acknowledgement is provided to the Web server 203 from the Web service client 204 (S20).

Then, the Web service server 103 requests the scanning function unit 107 to start scanning. The scanning function unit 107 controls the scanner 125 for scanning the manuscript, and takes in an image. The image (scanned image) is temporarily stored in the storage 126 by the document control function unit 108.

When scanning the manuscript and storing the scanned image are completed, the Web service server 103 provides a notice of scanning completion to the Web server 203 of the server apparatus 2 according to a direction of the notice function unit 109 that detects the completion (S21). At this time, a document ID for uniquely identifying the scanned image stored is provided with the notice of scanning completion.

The Web server 203 receives the notice of scanning completion, and then issues an acquisition request to the Web service client 204 for acquiring a document ticket of the scanned image specified by the document ID (S22). Here, the document ticket means data needed for rightfully accessing an image (document) managed by the document control function unit 108 of the image formation apparatus 1. That is, only when a document ticket is presented does the document control function unit 108 permit accessing of the image corresponding to the document ticket.

Then, the Web service client 204 provides a request for the document ticket with the document ID to the Web service server 103 of the image formation apparatus 1 (S23). The Web service server 103 causes the document control function unit 108 to issue the document ticket for the image corresponding to the document ID. Here, the document control function unit 108 issues the document ticket only when the present user is permitted a right to access. Whether the right to access is permitted to the present user is determined based on information set up beforehand. If the document ticket is issued, the Web service server 103 provides the document ticket to the Web service client 204 of the server apparatus 2 (S24). Then, the Web service client 204 provides the document ticket to the Web server 203 (S25).

The Web server 203 receives the document ticket, and then sends a request, accompanied by the document ticket, to the Web service client 204 to start printing the image (namely, the scanned image) corresponding to the document ticket (S26). Then, the Web service client 204 sends a request, accompanied by the document ticket, the Web service server 103 of the image formation apparatus 1 to start printing (S27). Then, the Web service server 103 acknowledges the receipt of the request to the Web service client 204 (S28).

Then, the Web service server 103 sends an order, accompanied by the document ticket, to the printing function unit 106 to start printing. The printing function unit 106 acquires the scanned image from the document control unit 108 based on the document ticket, and controls the plotter 124 so that the scanned image is printed. When printing is completed, that event is detected by the notice function unit 109. The Web service server 103 provides the notice of completion of printing to the Web server 203 of the server apparatus 2 according to a report from the notice function unit 109 (S29).

The Web server 203 receives the notice of completion of printing, and then sends a request to the Web service client 204 to delete the scanned image, accompanied by the document ID (S30), because the scanned image is no longer necessary once printing is completed by the copying process. The Web service client 204 provides the deletion request of the scanned image to the Web service server 103 of the image formation apparatus 1, accompanied by the document ID (S31).

The Web service server 103 causes the document control function unit 108 to delete the image (scanned image) corresponding to the document ID from the storage 126, and provides a response to the deletion request to the Web service client 204 of the server apparatus 2 (S32). The response is then provided to the Web server 203 (S33).

Since the copying process is completed with the above, the Web server 203 directs the screen flow control unit 201 to generate a copying completion screen (S34). Then, the screen flow control unit 201 provides a direction to the Web service server 103 of the image formation apparatus 1 to update the screen (S35). The direction is provided to the Web browser 102 (S36). The Web browser 102 provides the updating request of the screen to the Web server 203 of the server apparatus 2 according to the direction (S37). The Web server 203 provides the updating request to the screen flow control unit 201 (S38). Then, the screen generating unit 202 of the screen flow control unit 201 generates copying completion screen data, and provides the data to the Web server 203 (S39). Then, the Web server 203 provides the copying completion screen data to the Web browser 102 of the image formation apparatus 1 (S40). Then, the Web browser 102 displays a copying completion screen 304 (refer to Fig. 7) based on the copying completion screen data on the operating unit 121.

As described above, when the user screen customizing function is not used, screens displayed by the operating unit 121 are shifted in the sequence of the menu screen 301, the copy setting screen 302, the screen during copying 303, and the copying completion screen 304 (refer to Fig. 7).

Next, the copying process wherein the user screen customizing function is used is described.

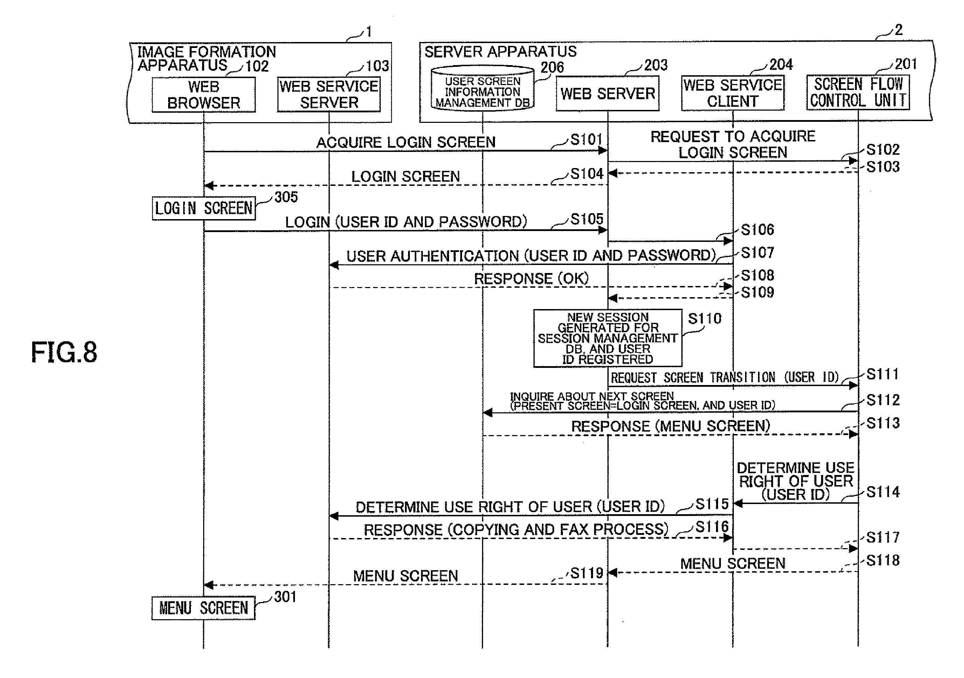

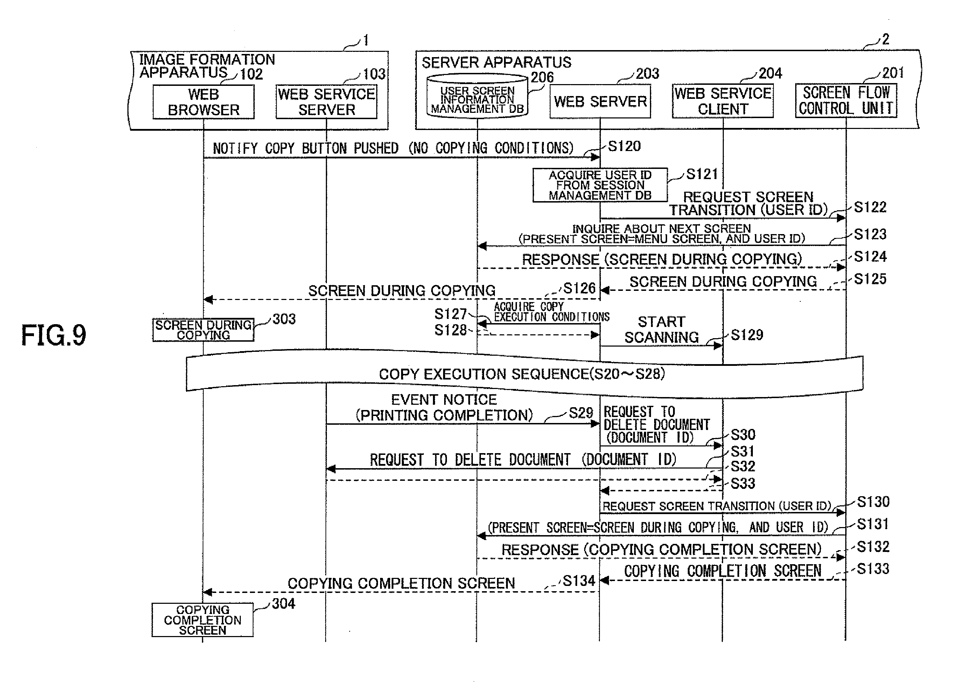

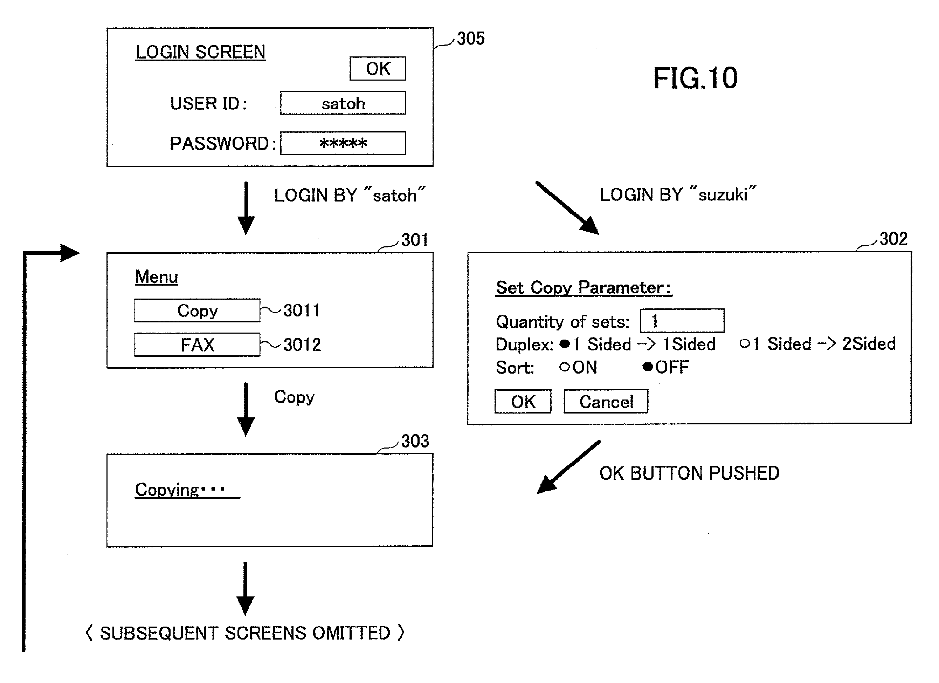

Fig. 8 and 9 are sequence diagrams for describing the copying process wherein the user screen customizing function is used, and Fig. 10 shows an example of the screen transition wherein the user screen customizing function is used.

When the power source is turned on to the image formation apparatus 1 and the Web browser 102 is started, the Web browser 102 requests the Web server 203 of the server apparatus 2 to provide a login screen (S101). The Web server 203 provides the acquisition request for the login screen to the screen flow control unit 201 (S102). Then, the screen generating unit 202 of the screen flow control unit 201 generates login screen data, and provides the data to the Web server 203 (S103). Here, every time the screen flow control unit 201 generates screen data for the current user, the screen flow control unit 201 stores the screen data as the screen currently displayed for the current user.

Then, the Web server 203 provides the login screen data to the Web browser 102 of the image formation apparatus 1 (S104), and the Web browser 102 displays a login screen 305 (refer to Fig. 10) according to the login screen data on the operating unit 121.

The user inputs his/her user ID and password in the login screen 305, and pushes the "OK" button. Then, the Web browser 102 provides the login request of the user (current user) to the Web server 203 with the user ID and password (S105). The login request is provided to the Web service client 204 (S106), and the Web service client 204 provides an authentication request, accompanied by the user ID and password, for the current user to the Web service server 103 of the image formation apparatus 1 (S107).

The Web service server 103 carries out authentication of the current user by comparing the user information registered in the user authentication information DB 110 with the user ID and password that are received, and provides an authentication result to the Web service client 204 of the server apparatus 2 (S108). The authentication result is provided to the Web server 203 (S109).

If the current user is authenticated, the Web server 203 generates a new session in the session management DB 207, and registers the user ID in the session (S110). Then, the Web server 203 sends a request, accompanied by the current user ID, to the screen flow control unit 201 to carry out screen transition (S111). Here, each session is assigned a unique session ID, and the session ID is attached to a subsequent request to the Web server 203 from the Web browser 102 so that the Web server 203 may discriminate a session with the Web browser 102 of each of the image formation apparatuses 1.

Then, the screen flow control unit 201 queries the user screen information management DB 206 about a screen to be displayed next (the next screen) (S112). At this time, identification information of the screen before change, that is, the screen presently displayed for the current user (here, the login screen), and the user ID are provided to the user screen information management DB 206.

}

The user screen information management DB 206 determines the next screen for the current user based on the user screen information registered.

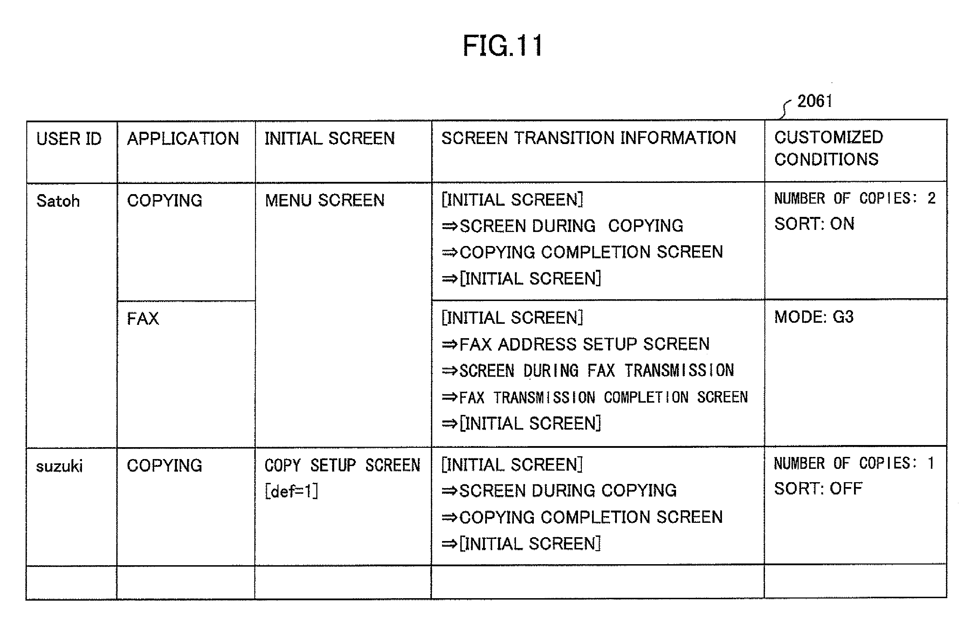

The user screen information management DB 206 includes a user screen information table 2061 as shown by Fig. 11, for example.

As shown in Fig. 11, an initial screen, screen transition information, and customized conditions are registered in the user screen information table 2061 for each user (user ID) and for each application as the user screen information.

The initial screen is the first screen that is displayed following the login screen. The screen transition information defines the sequence of screens to be displayed, i.e., screen transition. The customized conditions are default conditions of each user and application. If a setting screen (copy setting screen when copying) is not displayed, the customized conditions are used.

In the case of a user "satoh", for example, according to Fig. 11, the menu screen 301 is displayed as the initial screen for both copying and facsimile applications. For the copying application, the screen transition information is defined such that the screen during copying 303, and the copying completion screen 304 are to be displayed in this sequence after the initial screen (menu screen 301), and that the screen is to return to the initial screen (menu screen 301). For the facsimile application, the screen transition information is defined such that a facsimile address setting screen, a screen during facsimile transmission, and a facsimile transmission completion screen are to be displayed in this sequence after the initial screen, and that the screen is to return to the initial screen. As for the customized conditions for the copying application, the "number of copies" is defined as 2, and "Sorting" is set to "ON".

In the case of a user "suzuki", registration is made only about the copying application, wherein the copy setting screen 302 is specified as the initial screen. Further, about the screen transition information, the screen during copying 303 and the copying completion screen 304 are displayed in this sequence after the initial screen (copy setting screen 302), and the screen is to return to the initial screen (copy setting screen 302). About the customized conditions, the "number of copies" is defined as 1, and "Sorting" is set to "OFF".

In the case of the user "suzuki", information of [def=1] is registered in the column of the initial screen as shown in Fig. 11. The "def" represents a value of a default flag. If def=1, the customized conditions are used as default. If def=0, the customized conditions are not used as default, or no customized conditions are defined. In the sample shown in Fig. 11, the default flag is defined in the column of the initial screen; however, the default flag may be defined in the screen transition information. For example, as for the facsimile application of the user "satoh", the screen transition information may read "[initial screen] =>facsimile address setting screen [def=1] =>facsimile transmission.... ".

Here, Fig. 11 shows only the copying and facsimile applications; however, this is only for example, and other applications may be defined. In addition, as for the cases that are not defined in the user screen information table 2061, a default screen transition (for example, the screen transition shown in Fig. 7 for the copying application) is followed. The default screen transition may be hard-coded into logic, or alternatively, may be defined as a table other than the user screen information table 2061. Further alternatively, a user ID "default" may be defined in the user screen information table 2061 so that contents for the user ID "default" are used as the default screen transition.

Accordingly, to the inquiry at step S112, since the screen before change is the login screen, the user screen information DB 206 responds to the screen flow control unit 201 so that the next screen is the initial screen registered to the current user. In the case where the current user is "satoh", the menu screen 301 is specified as the next screen (S113). If the current user is "suzuki", the copy setting screen 302 is specified as the next screen (refer to Fig. 10).

Then, the screen flow control unit 201 queries the Web service client 204 about a use right of the current user identified by the user ID (S114). Here, the use right is an authority to use an available application of the image formation apparatus 1. Therefore, the query of the use right of the current user is equivalent to a query of which applications the current user is allowed to use. The query of the use right, accompanied by the user ID, is provided to the Web service server 103 of the image formation apparatus 1 by the Web service client 204 (S115).

The Web service server 103 determines the use right based on predetermined access control information, and provides the information (use right information for the user) to the Web service client 204 (S116). Here, suppose that the current user is allowed to use the copying and facsimile applications. Then, the use right information includes information that identifies the copy application and the facsimile application.

The use right information of the user is provided to the screen flow control unit 201 by the Web service client 204 (S117). The screen generating unit 202 of the screen flow control unit 201 generates the menu screen data that represent the next screen to be displayed based on the use right information of the user, and outputs the menu screen data to the Web server 203 (S118). Then, the Web server 203 provides the menu screen data to the Web browser 102 of the image formation apparatus 1 (S119). Then, the Web browser 102 displays the menu screen 301 (refer to Fig. 10) based on the menu screen data on the operating unit 121. Since, according to the present example, the current user "satoh" is allowed to use the copying and facsimile applications, the menu screen 301 includes a "Copy" button 3011 and a "FAX" button 3012 as shown in Fig. 10 for starting the respective applications. (If the current user is "suzuki", the copy setting screen 302 is displayed instead, wherein the values set up for the customized conditions of the user screen information table 2061 are displayed by default (refer to Fig. 10)).

If the user "satoh" pushes the "Copy" button 3011 on the menu screen 301, the Web browser 102 notifies the Web server 203 of the server apparatus 2 that the "Copy" button 3011 is pushed (S120 in Fig. 9). Based on the session ID, the Web server 203 acquires the user ID of the current user from the session management DB 207 (S121), and sends a request for screen transition, accompanied by the user ID, to the screen flow control unit 201 (S122).

The screen flow control unit 201 queries the user screen information management DB 206 about the next screen (S123). At this time, identification information of the screen before change (the menu screen 301, in this example), and the user ID are provided to the user screen information management DB 206. Based on the user screen information table 2061 as shown in Fig. 11, the user screen information management DB 206 determines the next screen, and the determined next screen is reported to the screen flow control unit 201 (S124). Since, the current user is "satoh", and the copying application is ongoing, the screen to be displayed next after the menu screen 301 is the screen during copying 303 as given in Fig. 11.

Then, the screen generating unit 202 of the screen flow control unit 201 generates screen data for the screen during copying 303 based on the response, and outputs the screen data for the screen during copying 303 to the Web server 203 (S125). Then, the Web server 203 provides the screen data to the Web browser 102 of the image formation apparatus 1 (S126). Then, the Web browser 102 displays the screen during copying 303 (refer to Fig. 10) on the operating unit 121 according to the screen data.

Then, the Web server 203 queries the user screen information management DB 206 about copy execution conditions of the current user (S127). According to Fig. 11, the screen transition information of the user "satoh" for copying does not display a copy setting screen. Therefore, when the screen during copying 303 is displayed, the copy execution conditions have not been specified. Accordingly, the Web server 203 queries the user screen information management DB 206 about the copy execution conditions.

Then, the user screen information management DB 206 acquires the customized conditions of the current user for the copying application from the user screen information table 2061. Then, the Web server 203 receives the acquired customized conditions (S128). Then, the Web server 203 requests the Web service client 204 to start scanning with the customized conditions (copy execution conditions) (S129).

Then, the copying process is performed as described at steps S20 through S33 of Fig. 6. In Fig. 9, steps that are the same as the steps in Fig. 6 are given the same reference numbers. Further, steps S20 through S28 are bundled into one entity called a copy execution sequence for convenience.

When the information indicating that the scanned image is deleted is received (S33), the Web server 203 sends a request, accompanied by the current user ID, for the screen flow control unit 201 to carry out screen transition (5130).

The screen flow control unit 201 queries the user screen information management DB 206 about the next screen (S131). At this time, the identification of the screen before change, i.e., the present screen (the screen during copying 303 in this example) and the user ID are provided to the user screen information management DB 206. Then, the user screen information management DB 206 determines the next screen based on the user screen information table 2061 as shown in Fig. 11, and responds to the screen flow control unit 201 about the determined next screen (S132). Since the current user is "satoh", and the copying application is carried out, the screen to be displayed next to the screen during copying 303 is the copying completion screen 304 as defined by Fig. 11. Accordingly, the copying completion screen 304 becomes the next screen.

Then, the screen generating unit 202 of the screen flow control unit 201 generates copying completion screen data based on the response, and provides the copying completion screen data to the Web server 203 (S133). The Web server 203 provides the copying completion screen data to the Web browser 102 of the image formation apparatus 1 (S134). Then, the Web browser 102 displays the copying completion screen 304 based on the copying completion screen data on the operating unit 121.

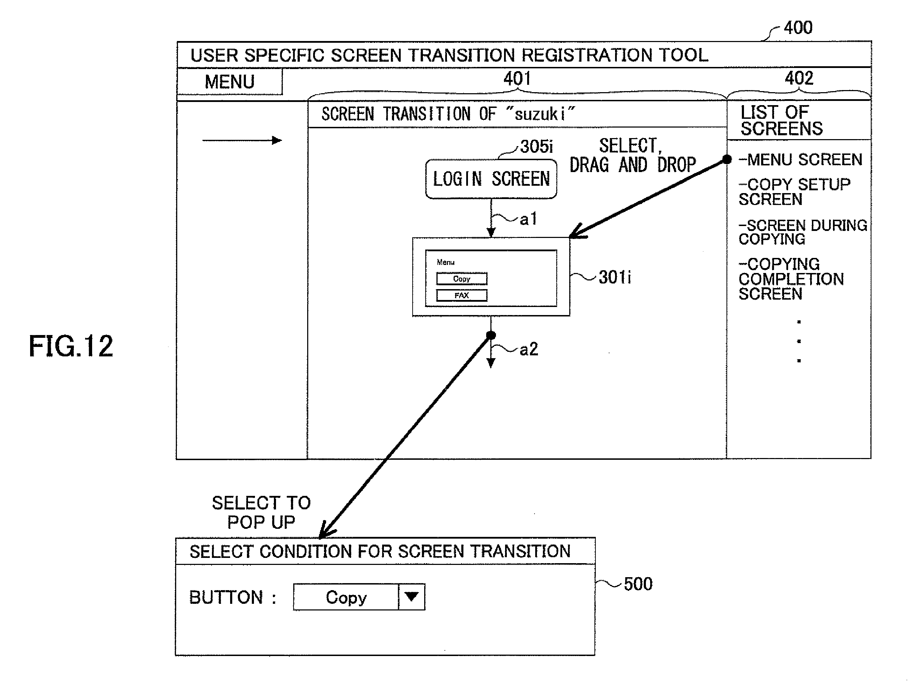

By the way, the user screen information can be defined through a screen as shown in Fig. 12. Fig. 12 shows an example of a screen for user screen information registration.

The screen for user screen information registration as shown in Fig. 12 is displayed by a screen of such as the operating unit 121 of the image formation apparatus 1 and a PC under control of the user screen registration control unit 205. The screen for user screen information registration includes a screen transition definition domain 401 and a screen list domain 402.

The screen definition domain 401 is for defining screen transition. In the screen definition domain 401, screen transition is defined by joining screen icons by an arrowhead, each icon representing a screen. That is, the arrowhead expresses a direction of the screen transition. In Fig. 12, a login screen icon 305i representing the login screen and a menu screen icon 301i representing the menu screen are combined by an arrowhead a1. Therefore, the menu screen 301 is defined to come next after the login screen 305.

The screen list domain 402 includes a list of registered screens. If a screen is selected in the screen list domain 402, then dragged and dropped to the screen transition definition domain 401, the screen icon corresponding to the selected screen is displayed in the screen transition definition domain 401.

By the way, there is a case where screen transition is desired to dynamically take place by an operation in the screen and setting contents (for example, whether a button is pushed). Then, in the screen transition definition domain 401, a transition condition can be added to an arrowhead. For example, in Fig. 12, if an arrowhead a2 expressing transition next to the menu screen 305 is selected, a transition condition setting screen 500 pops up. In the transition condition setting screen 500, a condition for the transition of the arrowhead a2 to take place is input. In Fig. 12, the arrowhead a2 is defined as transition that is performed when the "Copy" button is pushed.

In addition, the contents defined in the user screen information registration screen 400 are interpreted by the user screen registration control unit 205, and are registered into the user screen information management DB 206.

Since screens are displayed one after another based on the user screen information wherein the screen transition is defined for every user according to the embodiment the present invention as described above, the screen transition can be dynamically customized according to users.

Further, the user screen information is managed by the server apparatus 2, and control of the screen transition is performed by the screen flow control unit 201 of the server apparatus 2. Therefore, as shown in Fig. 1, where two or more image formation apparatuses 1 are connected to the server apparatus 2, a user can operate any one of the image formation apparatuses 1 with the screens, the sequence of which screens is personalized based on the same user screen definition information. That is, the same operability is offered to each user with any one of the image formation apparatuses 1.

Further, the present invention is not limited to these embodiments, but variations and modifications may be made without departing from the scope of the present invention.

## Claims

1. A display screen controlling apparatus for controlling display of a screen on a console panel of an electronic apparatus connected through a network, the display screen controlling apparatus being **characterized by**:
a determining unit for determining a screen to be displayed next based on screen transition information wherein transition of screens to be displayed by the console panel is defined according to
a user,
a screen presently displayed by the console panel,
an identifier of the user, and
the screen transition information;
a screen data generating unit for generating screen data for displaying the screen determined by the determining unit on the electronic apparatus; and
a screen data providing unit for providing the screen data to the electronic apparatus.

2. The display screen controlling apparatus as claimed in claim 1, **characterized in that**:
a plurality of the electronic apparatuses are connected through the network to the display screen controlling apparatus; and
the determining unit determines the screen to be displayed next based on the screen transition information on the electronic apparatuses.

3. The display screen controlling apparatus as claimed in any one of claims 1 and 2, **characterized in that**:
the screen transition information defines transition of the screens for every function of the electronic apparatus according to a user; and
the determining unit determines the screen to be displayed next based on the screen presently displayed by the account electronic apparatus, the identifier of the user who is operating the electronic apparatus, the function of the electronic apparatus presently used, and the screen transition information.

4. The display screen controlling apparatus as claimed in any one of claims 1 through 3, **characterized in that**
if a set-up screen for inputting an execution condition of a function of the electronic apparatus is not included in the screen transition information, a predetermined execution condition is provided to the electronic apparatus and the electronic apparatus performs the function based on the predetermined execution condition.

5. The display screen controlling apparatus as claimed in claim 4, **characterized in that** the execution condition is predetermined according to a user.

6. The display screen controlling apparatus as claimed in any one of claims 1 through 3, **characterized in that**
a set-up screen for inputting an execution condition of a function of the electronic apparatus is included in the screen transition information, and
a default value to be displayed in the set-up screen is set up according to a user.

7. An electronic apparatus including a console panel, **characterized by**:
a screen requesting unit for issuing an acquisition request for a screen to be displayed by the console panel, which acquisition request is issued to the display screen controlling apparatus as claimed in any one of claims 1 through 6; and
a display unit for displaying a screen provided in response to the acquisition request on the console panel.

8. A display screen controlling method for a display screen controlling apparatus to control display of a screen to be displayed by a console panel of an electronic apparatus connected through a network, the display screen controlling method being **characterized by**:
a determining step of determining a screen to be displayed next based on a screen presently displayed by the console panel, an identifier of a user who is operating the electronic apparatus, and screen transition information wherein transition of screens to be displayed by the console panel is defined according to the user;
a screen data generation step of generating screen data of the screen determined in the determining step for displaying on the electronic apparatus; and
a screen data providing step of providing the screen data to the electronic apparatus.

9. The display screen controlling method as claimed in claim 8, **characterized in that**
the determining step determines the screen to be displayed next based on the screen transition information to a plurality of the electronic apparatuses.

10. The display screen controlling method as claimed in any one of claims 8 and 9, **characterized in that**
the screen transition information defines transition of the screens for each function of the electronic apparatus for each user, and
the determining step determines the screen to be displayed next based on
the screen presently displayed by the electronic apparatus,
the identifier of the user who is operating the electronic apparatus,
a function of the electronic apparatus presently used, and
the screen transition information.

11. The display screen controlling method as claimed in any one of claims 8 through 10, **characterized in that**
if a set-up screen for inputting an execution condition of a function of the electronic apparatus is not included in the screen transition information, a predetermined execution condition is provided to the electronic apparatus and the electronic apparatus performs the function based on the predetermined execution condition.

12. The display screen controlling method as claimed in claim 11, **characterized in that** the execution condition is predetermined according to a user.

13. The display screen controlling method as claimed in any one of claims 8 through 10, **characterized in that**
a set-up screen for inputting an execution condition of a function of the electronic apparatus is included in the screen transition information, and
a default value to be displayed in the set-up screen is set up according to a user.

14. A display screen controlling method for an electronic apparatus including a console panel, **characterized by**:
a screen requesting step of issuing an acquisition request for a screen to be displayed by the console panel, which acquisition request is issued to the display screen controlling apparatus as claimed in any one of claims 1 through 6; and
a display step of displaying a screen provided in response to the acquisition request on the console panel.
